Europäisches Patentamt

European Patent Office

Office européen des brevets

(11) Publication number: **0 267 669**
**A2**

## (12) EUROPEAN PATENT APPLICATION

(21) Application number: 87305742.6

(51) Int. Cl.4: **G11B 5/596**

(22) Date of filing: 29.06.87

(30) Priority: 10.11.86 US 928763

(43) Date of publication of application:
**18.05.88 Bulletin 88/20**

(84) Designated Contracting States:
**DE FR GB**

(71) Applicant: **MAGNETIC PERIPHERALS INC.**
**8100-34th Avenue South**
**Minneapolis Minnesota 55440(US)**

(72) Inventor: **Albert, Glenn Douglas**
**11204 N.W. 113th Street**
**Yukon Oklahoma 73099(US)**

(74) Representative: **Caro, William Egerton et al**
**J. MILLER & CO. Lincoln House 296-302 High**
**Holborn**
**London WC1V 7JH(GB)**

(54) **Apparatus for writing data onto or recovering data from recording media and method of calibrating or adjusting the position of a transducer head.**

(57) An apparatus for writing data onto or recovering data from predetermined data tracks on a data recording media (50) includes a servo recording media (52) containing a plurality of servo tracks, each corresponding to one of the data tracks; a servo transducer (62) for reading the servo tracks to recover a servo signal; a data transducer (56) for writing and/or reading data on the data recording media; and a link (58,64) linking the servo transducer (62) and the data transducer (56) so that when the servo transducer is recovering a servo signal from a servo track, the data transducer is positioned at a corresponding track on the data recording media; and an actuator (70) for adjusting the position of the link. A calibration track (74) is recorded at a predetermined location on the data recording media, the calibration track being defined by an IN signal prerecorded at an inboard bound of said calibration track and an OUT signal prerecorded at an outboard bound of the calibration track. The data transducer (56) reads the IN and OUT signals to recover a resultant calibration signal when the actuator (70) operates the link (58,64) to position the data transducer to read the calibration track. An OUT peak detector (84) is responsive to the data transducer (56) for producing an OUT peak signal representative of the peak strength of the read OUT signal. An IN peak detector (86) is responsive to the data transducer (56) for producing an IN peak signal representative of the peak strength of the read IN signal. A control circuit (88,90,92) responsive to the OUT and IN peak signals for providing a control signal representative of the offset of the data transducer from the centre of the track defined by the OUT and IN signals.

# APPARATUS FOR WRITING DATA ONTO OR RECOVERING DATA FROM DATA RECORDING MEDIA AND METHOD OF CALIBRATING OR ADJUSTING THE POSITION OF A TRANSDUCER HEAD

This invention relates to apparatus for writing data onto or recovering data from recording media and to apparatus and methods for calibrating or adjusting the position of transducer heads in relationship to data tracks, and particularly, although not so restricted, to apparatus for compensating for shifts in track position of transducer heads caused by thermal expansion of an arm carrying the transducer head.

In rotatable memory devices, such as magnetic and optical disk drives, it is important to maintain a transducer head as close as possible to the centre of the track. However, with increasing density on the disks and decreased spacing of concentric tracks, minor shifts in the head position due to thermal distortion of a head actuator arm can cause a head to miss seriously the desired track, thereby increasing the likelihood that data will be improperly read or recorded. Heretofore, dedicated servo systems of commercial disk drives have not been capable of compensating the position of a head during operation.

The present invention employs prerecorded calibration signals at a dedicated area of each disk, outside the data recording area, which calibration signals are utilised for periodic correction track centering of the respective head.

According to one aspect of the present invention there is provided apparatus for writing data onto or recovering data from predetermined data tracks on a data recording media; said apparatus including a servo recording media containing a plurality of servo tracks, each corresponding to one of said data tracks; a servo transducer for reading said servo tracks to recover a servo signal; a data transducer for writing and/or reading data on said data recording media; and link means linking said servo transducer and said data transducer so that when said servo transducer is recovering a servo signal from a servo track, said data transducer is positioned at a corresponding track on the data recording media; and actuator means for adjusting the position of said link means; characterised by a calibration track recorded at a predetermined location on said data recording media, said calibration track being defined by an IN signal prerecorded at an inboard bound of said calibration track and an OUT signal prerecorded at an outboard bound of said calibration track, said data transducer reading said IN signal and said OUT signal to recover a resultant calibration signal when said actuator means operates said link means to position said data transducer to read said calibration track; OUT peak detector means responsive to said data transducer for producing an OUT peak signal representative of the peak strength of said read OUT signal; IN peak detector means responsive to said data transducer for producing an IN peak signal representative of the peak strength of said read IN signal; and control means responsive to said OUT peak signal and said IN peak signal for providing a control signal representative of the offset of said data transducer from the centre of the track defined by said OUT signal and said IN signal.

The apparatus may include microprocessor means responsive to said control signal to operate said actuator means to adjust the position of said link means.

Said control means preferably comprises a first filter for filtering said OUT peak signal, a second filer for filtering said IN peak signal, compare means responsive to the filtered IN and OUT peak signals for establishing a binary value representative of the identity of the greater peak value of the filtered IN and OUT peak signals, said microprocessor being responsive to said binary value established by said compare means for operating said actuator means to shift the position of said link means in compensation.

Said microprocessor may be operated to shift the position of said link means one-half track in compensation, timer means being provided responsive to operation of said microprocessor and said compare means for providing a signal representative of the time duration between the operation of said actuator means and any change in said binary value.

Alternatively the apparatus may include microprocessor means for storing, for each data transducer, an offset value representative of the degree of offset of the respective data transducer from the centre of its respective calibration track, said actuator means being responsive to said microprocessor means to correspondingly adjust the position of the data transducer when said data transducer tracks a data track, said microprocessor means being responsive to said control signal to alter said offset value.

Preferably said IN and OUT signals are analog signals having peaks which are mutually exclusive in time, recovery means producing mutually exclusive IN gate and OUT gate signals corresponding in time to the exclusive peaks of the respective IN and OUT signals, said IN peak detector being responsive to said resultant calibration signal and said IN gate signal to produce said IN peak signal and said OUT peak detector being responsive to said resultant calibration signal and said OUT gate signal to produce said OUT peak signal. Thus said control means may comprise a difference amplifier for providing an analog output signal representative of the difference between said OUT peak signal and IN peak signal, and converter means for converting said analog output signal to a digital signal.

According to another aspect of the present invention there is provided a method of calibrating the position of a transducer head to a calibrating track whose bounds are defined by an IN signal defining the inboard bound and an OUT signal defining the outboard bound, characterised by comprising: recovering a resultant signal having a waveform representative of the relative strength of the IN signal and OUT signal at the position of said transducer head, providing IN gate and OUT gate signals; producing an IN peak signal from said resultant signal and said IN gate signal representative of the peak recovered IN signal; producing an OUT peak signal from said resultant signal and said OUT gate signal representative of the peak recovered OUT signal; and determining the offset of said transducer head from the centre of the calibration track from the IN peak and OUT peak signals.

According to a further aspect of the present invention there is provided a method of adjusting the position of a data transducer to a data track on a data media wherein a servo track on a servo media corresponds to said data track and a servo transducer is linked to said data transducer so that said transducers are moved together by an actuator to a desired track, said actuator being operated by a position signed to move said transducers to a position such that said servo transducer tracks the desired servo track, said method being characterised by comprising: determining an offset between said data transducer and a calibration track on said data media; and altering said position signal by an amount representative of said offset so that said actuator positions said servo transducer off the desired servo track by the amount of said offset.

One feature of the present invention resides in the fact that track centering may be accomplished while the disk drive is in operation, thereby assuring proper track centering of the head.

The invention is illustrated, merely by way of example, in the accompanying drawings, in which:-

Figure 1 is a series of waveforms illustrating the principles of operation of an embodiment of the present invention;

Figures 2 and 3 are waveforms illustrating outboard and inboard tracking in accordance with the embodiment of the present invention;

Figure 4 is a block circuit diagram of apparatus according to the present invention for detecting the track offset of a transducer;

Figure 4A is a block diagram of a modification of the apparatus shown in Figure 4; and

Figures 5 and 6 illustrate the principle of offset error correction using a time measurement with the apparatus illustrated in Figure 4.

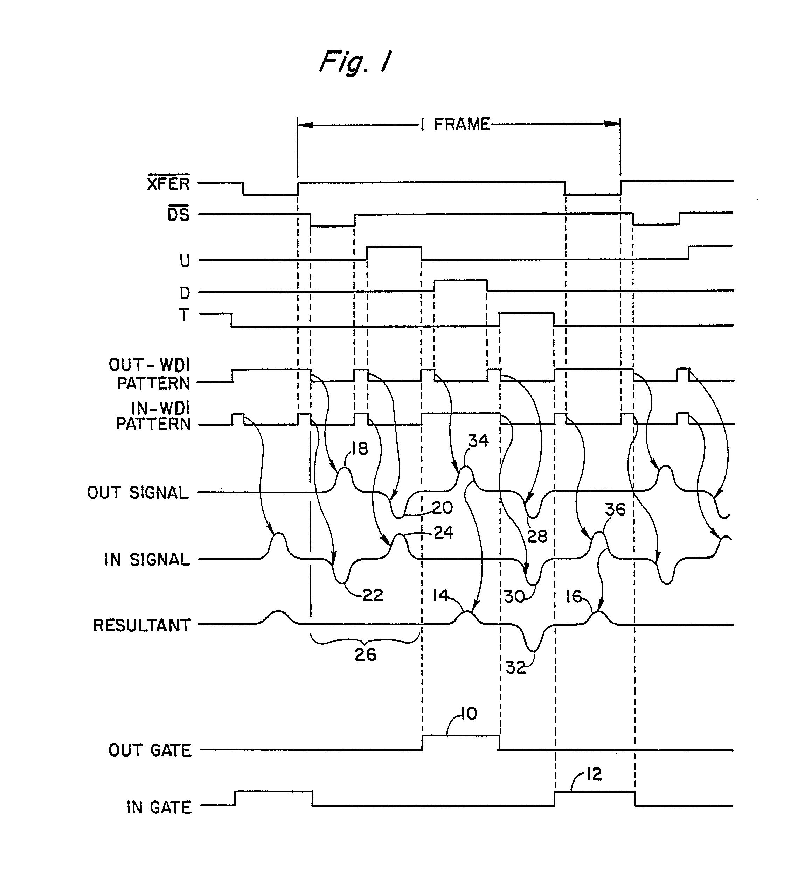

Referring to the drawings and particularly to Figure 1, there is a timing diagram which illustrates certain principles of the present invention. WREN III (Trade Mark) magnetic disk drives, produced by Magnetic Peripherals Inc., of Oklahoma City and available from Control Data Corporation of Minneapolis, employ certain control signals, known as XFER, DS U, D and T. These signals, which are used to control servo data transfer, recovered from patterns prerecorded on servo tracks recorded on a servo disk dedicated for that purpose. There is a separate servo track for each data track, although where multiple data disks are employed, a single servo track serves a corresponding data track on each data disk surface. Each servo track is, in reality, a pair of tracks recorded at the inboard and outboard bounds of the servo track. A single servo head, however, reads the inboard and outboard pair of tracks simultaneously to generate a composite or resultant signal. The XFER, DS, U, D and T signals are digital signals recovered from the servo track, in a manner well known in the art. The XFER, DS, U, D and T signals are generated by a servo logic chip of the disk drive and are adjusted to the clock signal from a phase locked loop, in known manner. It is sufficient for purposes of understanding the present invention to know the signals are present. Thus, waveforms $\overline{XFER}$, $\overline{DS}$, U, D and T in Figure 1 represent the inverse XFER, inverse DS, and the U, D and T control signals available from the logic chip.

In accordance with the present invention, outboard write data input signal pattern (OUT-WDI) is logically generated from the $\overline{DS}$, U, T and D signals, and an inboard write data input signal pattern (IN-WDI) is logically generated from the $\overline{DS}$, U, T and $\overline{XFER}$ signals:

$$OUT\text{-}WDI = (\ \overline{DS}.\overline{U}.\overline{T}\ ).\overline{D}$$
$$IN\text{-}WDI = (\ \overline{DS}.\overline{U}.\overline{T}\ ).\ \overline{XFER}$$

The IN-WDI and OUT-WDI signal patterns are recorded at a dedicated location of each data surface of the data disk of the disk drive system. In particular, it is contemplated that after the disk drive has been assembled and the disk fixed in position with the servo disk having its servo tracks recorded thereon, the IN-WDI and OUT-WDI signal patterns are generated and recorded at the inboard and outboard bounds of the outermost track of each data disk surface. These patterns are the calibration signals and the track is the calibration track referred to later.

Without a head-track offset compensate - scheme, the location of each data head is dependent on the accuracy of the servo heads tracking the servo tracks on the servo surface, and the integrity of the actuator arm. Thermal excursions within the drive can create thermal distortion of the actuator or other mechanisms, thereby affecting the accuracy of data tracking. Distortion caused by thermal excursions occur relatively slowly, so the present invention contemplates periodic calibration of each head of each data surface to generate data representative of the amount of correction required for that head. Calibration need be done every 10 minutes to one hour, depending on the environment within which the drive operates.

In accordance with the present invention, the actuator assembly shifts the position of the heads so that the servo head tracks the servo track on the servo surface which corresponds to the calibration track on the data surfaces. The data head being calibrated reads calibration data from the recorded calibration tracks. The data head generates an OUT signal from the OUT-WDI pattern and an IN signal from the IN-WDI pattern. An examination of the OUT signal and IN signal will reveal that a peak occurs in each analog signal corresponding to each return-to-zero or negative transition of the OUT-WDI and IN-WDI pulse pattern.

It will be appreciated that the data head does not recover the IN signal and OUT signal separately, but instead recovers a resultant or composite signal. It will further be appreciated that the waveform of the resultant signal will be influenced by the relative strength of the inboard and outboard calibration signals (IN signal and OUT signal) at the position of the data head. Therefore, if the head is positioned closer to one bound than the other, the resultant signal will be more greatly influenced by that bound signal than the other.

The resultant signal is, in fact, the signal recovered by a read head or transducer reading the calibration track, between the outboard bound (where the OUT signal is recorded) and the inboard bound (where the IN signal is recorded). The waveform of the resultant signal will change, depending on whether the head is inboard or outboard from track centre, thereby reading stronger or weaker IN signals and OUT signals.

An OUT gate signal is generated from the U and T signals and provides an OUT gate enable pulse 10 for the period between when the U control signal goes low and the T control signal goes high. The IN gate signal is generated from the T and $\overline{DS}$ (or DS) signals, and provides an IN gate enable pulse 12 for the period between when the T control signal goes low and the $\overline{DS}$ control signal goes low (or when the DS signal goes high). Noteworthy, peak 14 in the resultant signal is centered in the window read by the OUT gate enable pulse 10 and the peak 16 in the resultant signal is centered in the window created by the IN gate enable pulse 12.

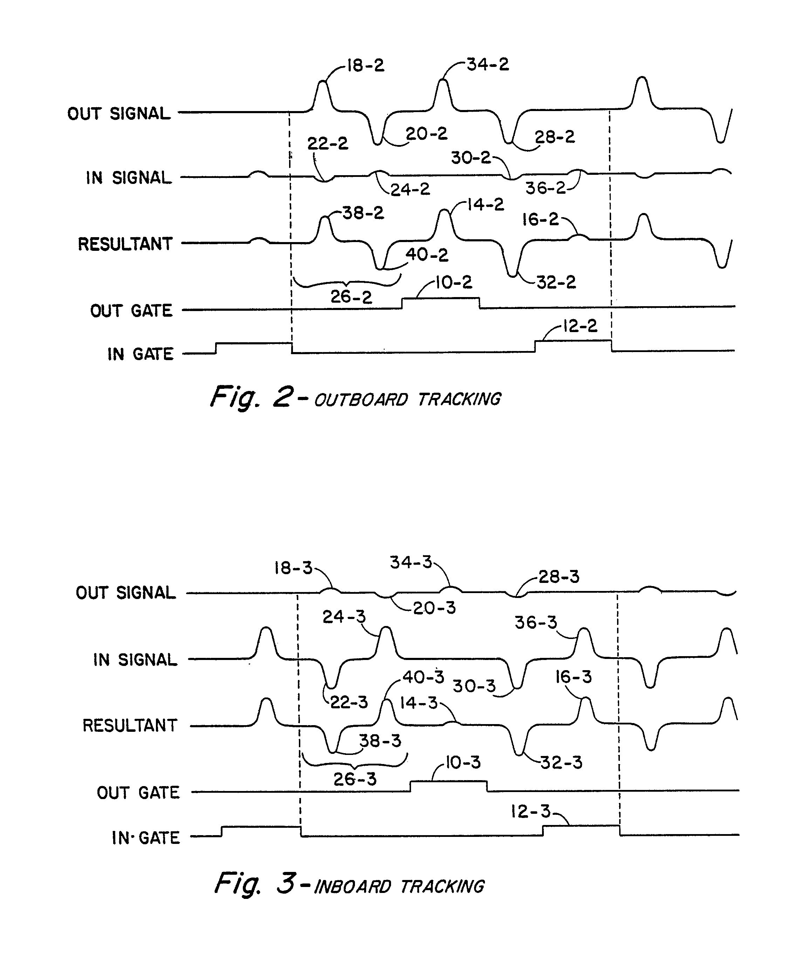

Figure 1 illustrates the ideal situation where the read head is exactly on calibration track centre, whereas Figures 2 and 3 illustrate the conditions where the read head is tracking off track centre toward the outboard and inboard directions, respectively. In the ideal or nominal case where the transducer head is centered on the track, the head will read the IN signal and OUT signal equally, resulting in the resultant signal shown in Figure 1. For each frame, peaks 18,20 in the OUT signal are equal and opposite to peaks 22,24 in the IN signal, which when summed cancel each other out resulting in a quiescent period 26 in the resultant signal. Peaks 28,30 in the OUT and IN signals are additive, resulting in a large negative peak 32 in the resultant signal. Peak 34 in the OUT signal has no counterpart in the IN signal and therefore forms the peak 14 in the resultant signal; peak 36 in the IN signal forming the peak 16 in a similar manner. Noteworthy, peak 14 in the resultant signal (which is derived from the peak 34) occurs during OUT gate pulse 10 and the peak 16 in the resultant signal (which is derived from IN signal peak 36) occurs during the IN gate pulse signal 12. Also noteworthy in this example of on track centre is the fact that the peaks 14,16 are equal. The quiescent period 26 indicates a flat signal response, which can be examined on an oscilloscope for test purposes, but the period 26 is not preferred to be used for position error correction according to the present invention. Also noteworthy is that the peak 32 is always at full amplitudes, regardless of head offset, and can serve to control an automatic gain control to normalise the peaks 14,16 for linear representation of displacement.

Figure 2 illustrates the condition where the head is tracking outboard of track centre. In this case, the servo head will read the OUT signal more strongly than the IN signal (as diagramatically shown in Figure 2), thereby producing a resultant signal with a large peak 14-2 during the OUT gate pulse 10-2, but a small peak 16-2 during the IN gate pulse 12-2. Peak 34-2 of the OUT signal more strongly influences the resultant signal than peak 36-2 of the IN signal, resulting in the large peak 14-2 and small peak 16-2. Peaks 38-2 and 40-2 appear in the zone 26-2, which on an oscilloscope would also be indicative of offset. Nevertheless, the present invention makes use of the large peak 14-2 caused by the OUT signal as compared to the small peak 16-2 caused by the IN signal to determine the outboard condition of the track following.

Figure 3 illustrates the inboard condition wherein peak 16-3 in the resultant signal, caused by peak 36-3 of the IN signal, is larger than peak 14-3 in the resultant signal, caused by peak 34-3 in the OUT signal. Again, peaks 38-3 and 40-3 occurring during zone 26-3 may be used for test purposes.

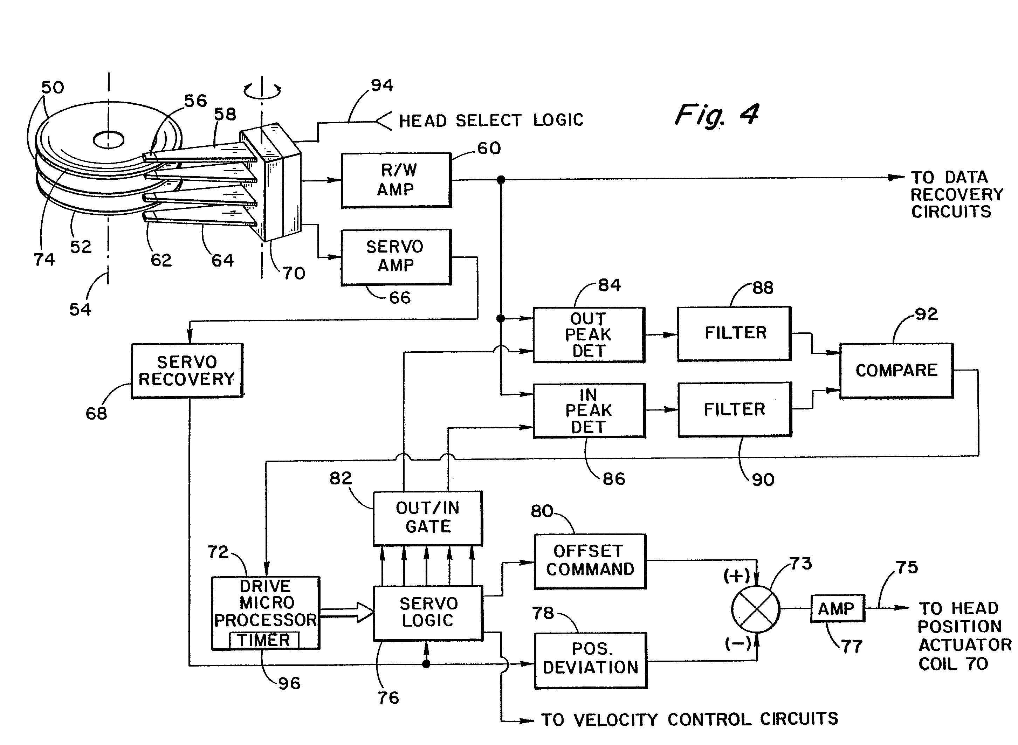

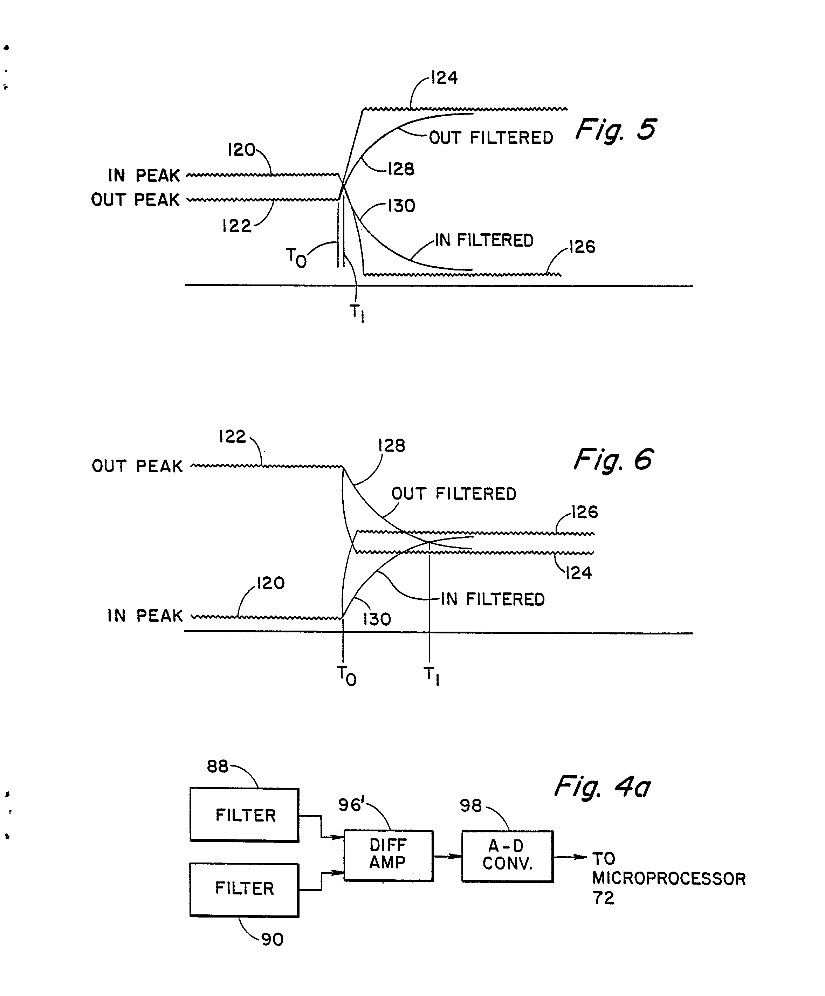

Figure 4 illustrates apparatus according to the present invention for adjusting the position of a transducer head. A disk drive includes a plurality of fixed disks 50, such as magnetic disks on which data may be magnetically encoded. A disk 52 is also a magnetic disk on which data may be recorded, but the bottom surface is dedicated to prerecorded servo tracks. Disks 50,52 are driven by a common motor (not shown) for rotation about an axis 54. Data heads 56 are mounted to respective actuator arms 58 for radial movement across the surface of the disks 50. In practice, data heads are attached to actuator arms for scanning the opposite surface of each disk 50, and there may, in fact, be any number of data disks. The heads 56 are connected to a read/write amplifier 60 for providing data to data recovery circuits (not shown). A servo head 62 is mounted to an actuator arm 64 for radial movement across the bottom surface of the disk 52 to read the prerecorded servo tracks. The head 62 is connected to a servo amplifier 66 to provide servo data to a recovery circuit 68. The servo recovery circuit 68 provides analog servo data to a position deviation circuit 78, which in turn provides an analog deviation signal to a summation circuit 73. Servo logic 76, operating under control of a microprocessor 72, provides a digital offset data signal to an offset command 80, which in turn provides an analog offset command signal to the summation circuit 73. The offset command 80 is a digital-to-analog converter. The summation circuit 73 provides a control signal via an amplifier 77 and a lead 75 to the actuator coil of a head positioning actuator 70. The actuator arms 58,64 are mounted together, and to the actuator 70. The control signal on the lead 75 actuates the actuator 70 to control the position of the desired head 56 on the selected track.

Each data recording surface of the disks 50,52 includes, at its outermost region, a track 74 dedicated to the calibration signals herein described. In particular, each calibration track 74 has concentric inboard and outboard bounds defined by the recording of the IN-WDI and OUT-WDI patterns from which the IN signal and OUT signal, respectively, are recovered. The servo surface of the disk 52, however, contains a servo data track corresponding to the calibration track on the data surface, which servo track provides the XFER, DS, U, D and T control signals described above.

The servo recovery circuit 68 provides servo data to the servo logic 76. The servo logic 76 provides the XFER, DS, U, D and T control signals to an OUT/IN gate circuit 82. The gate circuit 82 generates the OUT gate pulse signal 10 and the IN gate pulse signal 12 as heretofore described and supplies the OUT gate signal 10 to an OUT peak detector 84 and the IN gate signal 12 to an IN peak detector 86. The resultant signal recovered by the data head is also provided to the peak detectors 84,86. The outputs of the peak detectors 84,86 are filtered by respective filters 88,90 and compared by a compare circuit or comparator 92. The comparator 92 provides its output to drive the microprocessor 72. A select signal is provided by a control bus 94 to select one of the heads 56 for reading or writing.

When it is desired to calibrate the position of one of the heads 56, the microprocessor 72 initiates a seek operation to move the actuator arms 58,64 to a position where the head 56 to be calibrated is approximately tracking the calibration track 74 on the corresponding disk 50 and the servo head 62 is tracking the corresponding servo track on the servo surface of the disk 52. Any slight deviation in the position of the servo head 62 tracking the servo track will be detected by position deviation circuit 78 to adjust the actuator 70 so that the servo head 62 exactly tracks the respective servo track.

(The seek operation is accomplished under command of the microprocessor 72 by operating velocity control circuits (not shown) to shift the heads from one track to another in known manner).

The read/write amplifier 60 recovers the resultant signal and provides that signal to the peak detectors 84,86. The peak detector 84 detects the presence of the peak 14 during the OUT gate pulse signal 10 and the peak detector 86 detects the presence of the peak 16 during the IN gate pulse signal 12. Thus, the output of the peak detector 84 is representative of the amplitude of the peak 14, whereas the output of the peak detector 86 is representative of the amplitude of the peak 16. The results are filtered by the filters 88,90 to produce an OUT peak signal and an IN peak signal. The OUT peak signal and the IN peak signal are compared by the comparator 92 to provide a signal representative of which of the peaks 14,16 is larger to the microprocessor 72. The microprocessor 72 generates control signals to the servo logic 76 to adjust the setting of the offset command 80 and position of the heads.

The microprocessor 72 stores offset information provided as a result of the calibration performed by the comparator 92 Thus, each time a data head is calibrated the signal from the comparator 92 operates the microprocessor 72 to reestablish offset data for that head. Thereafter, each time that head is selected (by head select logic via the bus 94) or the actuator 70 position is adjusted, the position of the actuator is adjusted by the signal from the offset command 80 summed through the summation circuit 73.

The offset command information is recalibrated by the microprocessor approximating the corrective offset for any error detected by the comparator 92. Using successive approximation, or incremental samplings, the offset value can be periodically reestablished. By incremental sampling, for example, the comparator 92 provides a binary signal representative of which peak 14 or 16 (from the OUT peak signal and the IN peak signal) is larger. The microprocessor 72 causes an offset correction in the direction to compensate for the offset, the correction being designed to move the head at selected increments until the binary value from the comparator 92 switches, indicative that the head crossed track centre.

Figure 4A shows an alternative to the comparator 92 and the incremental samplings or successive approximation to establish offset values. A difference amplifier 96 may be used in place of the comparator 92 to provide an analog signal representative of the difference between the IN peak signal and the OUT peak signal, and hence the offset needed for calibration. The analog differences signal is digitised by an analog-to-digital converter 98 for storage in the microprocessor 72.

Another alternative to offset detection uses the apparatus as shown in Figure 4, but instead of successive approximation or incremental offset sampling, the microprocessor 72 forces a one-half track shift toward (or past) compensation and records the time difference between the head shift and the reverse of filtered peak signals. Thus, if the IN peak signal is stronger than the OUT peak signal, the comparator 92 may provide a binary 1, whereas if the OUT peak signal is stronger than the IN peak signal, the comparator 92 provides a binary zero. When it is desired to calibrate the position of the head, the microprocessor 72 provides a control signal via the offset command 80 and the summation circuit 73 to the head actuator 70, causing the head actuator to shift in the opposite direction exactly one-half track. Thus, if the comparator 92 had been set to a binary 1 indicating the head is inbound of track centre, the microprocessor 72 provides a signal to the actuator 70 to move the head one-half track outbound. At the same time, the microprocessor 72 operates an internal timer 96 to commence a time measurement. The timer 96 is arranged to halt time measurement when the condition of the comparator 92 reverses. A digital representation of the time measurement of the time 96 is provided by the microprocessor 72.

Figures 5 and 6 illustrated the time measurement operation of the apparatus illustrated in Figure 4. In Figure 5, the head is near track centre, but slightly more inbound than it is outbound, resulting in a slightly higher IN peak signal 120 than OUT peak signal 122. At time $T_0$ the microprocessor 72 causes a one-half track shift in the head forcing the head significantly more outbound than inbound, causing a high OUT peak signal 124 and small IN peak signal 126. However, the filtered signal from the filters 88,90 follow waveforms 128,130, respectively, so that the comparator 92 will reverse to zero at the time of crossover of the waveforms 128,130. This occurs at time $T_1$, which halts further timing in the time 96. The time differential between $T_0$ and $T_1$ is indicative of the amount of original offset of the head.

By comparison, in Figure 6 it is assumed that the OUT peak signal 122 is high and the IN peak signal 120 is low, indicative that the head is significantly outbound from track centre. At time $T_0$, the head is moved one half-track inbound, causing a reversal in the signals 124,126 but the waveforms 128,130 do not cross until $T_1$ to halt the time 96. A comparison of the time durations between $T_0$ and $T_1$ in Figures 5 and 6 reveals that the time is very short in Figure 5 where the head was tracking near track centre, whereas it is quite large in Figure 6 where the head was significantly off centre. The elapsed time between $T_0$ and $T_1$ is, therefore, indicative of the degree of original offset. The microprocessor 72 may readjust offset correction in command 80 an amount determined by the measured time. For example, in Figure 5, the microprocessor would move the head inboard an amount equal to one-half track less the offset determined by the time 96.

Although the present invention has been described primarily in relation to data reading (recovering), it is clear that the transducer heads 56 could be write heads or read/write heads for recording or recording and/or recovery functions. In either case, however, the IN signals and OUT signals are prerecorded on the data disk.

When it is desired to seek a particular track, the microprocessor 72 initiates a seek via the velocity circuits (not shown) to move the selected head to the desired track location. (The head is selected via the head select logic and the bus 94). The microprocessor 72 selects the offset previously established for the selected data head 56 and issues the offset command to the servo logic 76 to operate the offset command 80 to provide an offset signal which combines with the position signal to the operate actuator 70. When a null condition is achieved, indicative that the servo head 62 is at the position directed by the summed signal on the line 75, the actuator ceases movement. An inspection may reveal the servo head is slightly off servo track centre by an amount directed by the offset command so that the data head is directly on data track centre.

The present invention thus provides a track centering adjustment mechanism for in situ correction of track offset caused by thermal expansion, and the like. The apparatus is effective in operation and efficient in use.

## Claims

1. An apparatus for writing data onto or recovering data from predetermined data tracks on a data recording media (50); said apparatus including a servo recording media (52) containing a plurality of servo tracks, each corresponding to one of said data tracks; a servo transducer (62) for reading said servo tracks to recover a servo signal; a data transducer (56) for writing and/or reading data on said data recording media; and link means (58,64) linking said servo transducer (62) and said data transducer (56) so that when said servo transducer is recovering a servo signal from a servo track, said data transducer is positioned at a corresponding track on the data recording media; and actuator means (70) for adjusting the position of said link means; characterised by a calibration track recorded at a predetermined location on said data recording media, said calibration track being defined by an IN signal prerecorded at an inboard bound of said calibration track and an OUT signal prerecorded at an outboard bound of said calibration track, said data transducer (56) reading said IN signal and said OUT signal to recover a resultant calibration signal when said actuator means (70) operates said link means (58,64) to position said data transducer to read said calibration track; OUT peak detector means (84) responsive to said data transducer (56) for producing an OUT peak signal representative of the peak strength of said read OUT signal; IN peak detector means (86) responsive to said data transducer (56) for producing an IN peak signal representative of the peak strength of said read IN signal; and control means (88,90,92) responsive to said OUT peak signal and said IN peak signal for providing a control signal representative of the offset of said data transducer from the centre of the track defined by said OUT signal and said IN signal.

2. Apparatus as claimed in claim 1 characterised by including microprocessor means (72) responsive to said control signal to operate said actuator means (70) to adjust the position of said link means (58,64).

3. Apparatus as claimed in claim 2 characterised in that said control means (88,90,92) comprises a first filter (88) for filtering said OUT peak signal, a second filer (90) for filtering said IN peak signal, compare means (92) responsive to the filtered IN and OUT peak signals for establishing a binary value representative of the identity of the greater peak value of the filtered IN and OUT peak signals, said microprocessor (72) being responsive to said binary value established by said compare means (92) for operating said actuator means (70) to shift the position of said link means (58,64) in compensation.

4. Apparatus as claimed in claim 2 or 3 characterised in that said microprocessor (72) is operated to shift the position of said link means one-half track in compensation, timer means (96) being provided responsive to operation of said microprocessor and said compare means for providing a signal representative of the time duration between the operation of said actuator means and any change in said binary value.

5. Apparatus as claimed in any preceding claim characterised by including microprocessor means (92) for storing, for each data transducer (56,62), an offset value representative of the degree of offset of the respective data transducer from the centre of its respective calibration track, said actuator means (70) being responsive to said microprocessor means (92) to correspondingly adjust the position of the data transducer (56) when said data transducer tracks a data track, said microprocessor means (92) being responsive to said control signal to alter said offset value.

6. Apparatus as claimed in any preceding claim characterised in that said IN and OUT signals are analog signals having peaks which are mutually exclusive in time, recovery means (82) producing mutually exclusive IN gate and OUT gate signals corresponding in time to the exclusive peaks of the respective IN and OUT signals, said IN peak detector (86) being responsive to said resultant calibration signal and said IN gate signal to produce said IN peak signal and said OUT peak detector (84) being responsive to said resultant calibration signal and said OUT gate signal to produce said OUT peak signal.

7. Apparatus as claimed in claim 6 characterised in that said control means comprises a difference amplifier (96) for providing an analog output signal representative of the difference between said OUT peak signal and IN peak signal, and converter means for converting said analog output signal to a digital signal.

8. A method of calibrating the position of a transducer head to a calibrating track whose bounds are defined by an IN signal defining the inboard bound and an OUT signal defining the outboard bound, characterised by comprising: recovering a resultant signal having a waveform representative of the relative strength of the IN signal and OUT signal at the position of said transducer head, providing IN gate and OUT gate signals; producing an IN peak signal from said resultant signal and said IN gate signal representative of the peak recovered IN signal; producing an OUT peak signal from said resultant signal and said OUT gate signal representative of the peak recovered OUT signal; and determining the offset of said transducer head from the centre of the calibration track from the IN peak and OUT peak signals.

9. A method as claimed in claim 8 characterised by including shifting the position of the transducer head in compensation and repeating the steps of claim 8.

10. A method of adjusting the position of a data transducer to a data track on a data media wherein a servo track on a servo media corresponds to said data track and a servo transducer is linked to said data transducer so that said transducers are moved together by an actuator to a desired track, said actuator being operated by a position signed to move said transducers to a position such that said servo transducer tracks the desired servo track, said method being characterised by comprising: determining an offset between said data transducer and a calibration track on said data media; and altering said position signal by an amount representative of said offset so that said actuator positions said servo transducer off the desired servo track by the amount of said offset.

11. A method as claimed in claim 10 characterised in that said calibration track has bounds defined by an IN signal defining the inboard bound and an OUT signal defining the outboard bound, said offset is determined by recovering a resultant signal having a waveform representative of the relative strength of the IN signal and OUT signal at the position of said data transducer, providing IN gate and OUT gate signals, producing an IN peak signal from said resultant signal and said IN gate signal representative of the peak recovered IN signal, producing an OUT peak signal from said resultant signal and said OUT gate signal representative of the peak recovered OUT signal, and determining the offset of said data transducer from the centre of the calibration track from the IN peak and OUT peak signals.

12. A method as claimed in claim 10 or 11 characterised by including shifting the position of the data transducer in compensation and redetermining said offset.

13. A method as claimed in any of claims 8 to 12 characterised by including setting the binary value of a compare to be representative of the IN peak or OUT peak signal having the greater peak value, and incrementally shifting the position of said data transducer in compensation until the binary value of said compare switches.

14. A method as claimed in any of claims 8 to 13 characterised in that the degree of offset of said data transducer is determined from said IN peak and OUT peak signals by delay filtering said IN peak and OUT peak signals to produce filtered IN peak and filtered OUT peak signals, setting the binary value of a compare to be representative of the filtered IN peak or filtered OUT peak signal having the greater peak value, shifting the position of said data transducer one-half track in compensation, and measuring the time between the shift of position of said data transducer and any change of setting of the binary value of said compare.

15. A method as claimed in claim 14 characterised by including adjusting the position of said data transducer by an amount based on the time measured.

16. A method as claimed in any of claims 8 to 15 characterised by including adjusting the position of said data transducer by the determined offset.

## Fig. 1

0 267 669

Fig. 2 - OUTBOARD TRACKING

Fig. 3 - INBOARD TRACKING

Fig. 4

TO DATA RECOVERY CIRCUITS

TO VELOCITY CONTROL CIRCUITS

TO HEAD POSITION ACTUATOR COIL 70

*Fig. 5*

124

OUT FILTERED

120 IN PEAK

OUT PEAK

122

128

130

IN FILTERED

126

$T_0$

$T_1$

*Fig. 6*

122 OUT PEAK

128

OUT FILTERED

126

124

120

IN PEAK

130

IN FILTERED

$T_0$

$T_1$

*Fig. 4a*

88 FILTER

90 FILTER

96' DIFF AMP

98 A-D CONV.

TO MICROPROCESSOR 72